# EUROPÄISCHE PATENTSCHRIFT

(11) **EP 3 956 584 B1**
(45) Veröffentlichungstag und Bekanntmachung des Hinweises auf die Patenterteilung: **26.07.2023**
(21) Anmeldenummer: 20722493.2
(22) Anmeldetag: 16.04.2020
(51) Int. Cl.: F16H 55/50, G01M 3/28, G01M 3/32, G01M 5/00

(54) **ROLLE**
ROLLER
ROULEAU

(30) Priorität: 17.04.2019 DE 202019102212 U
(43) Veröffentlichungstag der Anmeldung: 23.02.2022
(73) Patentinhaber: C. u. A. Heiderich GmbH, 58256 Ennepetal (DE)
(72) Erfinder: WEISSFLOG, Harald, 58256 Ennepetal (DE)
(74) Vertreter: Patentanwälte Dörner & Kötter PartG mbB
(86) Internationale Anmeldenummer: PCT/EP2020/060658
(87) Internationale Veröffentlichungsnummer: WO 2020/212469

(56) Entgegenhaltungen:
- EP-A1- 2 497 741
- DE-A1-102011 108 230
- JP-A- S59 126 161

## Beschreibung

Die Erfindung betrifft eine Rolle, bestehend aus einem Rollenkörper mit einem Rollenkranz, wobei der Rollenkörper mindestens zwei Stege und in seinem Mittelpunkt eine Nabe aufweist, wobei die Stege den Bereich zwischen der Nabe und dem Rollenkranz bilden und zwischen denen ein Innenraum gebildet ist.

Rollen der eingangs genannten Art sind in vielfältiger Weise bekannt als Seil- und Führungsrollen, Seiltrommeln sowie Laufrollen und Laufräder. Sie dienen beispielsweise der Umlenkung von Seilen an Kränen, Baggern, Seilbahnen und dergleichen aber auch als Laufräder für Krananlagen oder dergleichen.

Aufgrund der Belastungen der Rollen unterliegen die Rollen einem Verschleiß und Materialermüdung. Zwar wird beispielsweise bei Seilrollen versucht, den Verschleiß von Rolle und Drahtseil durch den Einsatz von Schmiermitteln am Drahtseil zu reduzieren; dennoch lässt sich der Verschleiß nicht vollständig verhindern, so dass es im äußersten Fall zu durchgehenden Rissen im Rollengrund kommen kann. Zur Überwachung des Verschleißes ist es bspw. aus der EP 2 497 741 A1 bekannt, im Rillengrund der Seilrolle Mittel zur Anzeige des Verschleißes vorzusehen.

Hinzu kommt, dass Rollenkörper, Stege und Nabe üblicherweise miteinander verschweißt sind. Hier kann es aufgrund der dynamischen Belastungen zu Rissen in den Schweißnähten kommen. Solche Risse können zu einem schlagartigen Versagen der jeweiligen Rolle führen, wodurch erhebliche Schäden für Personen und Waren auftreten können. Zwar wird versucht, den Verschleiß der jeweiligen Rolle zu kontrollieren; auftretende Risse sind jedoch aufgrund der Kontrollintervalle sowie der Einbausituation kaum rechtzeitig zu erkennen.

Vor diesem Hintergrund liegt der Erfindung die Aufgabe zugrunde, eine Rolle zu schaffen, die eine selbständige und zugleich zuverlässige Kontrolle der Rolle auf mögliche Risse ermöglicht. Gemäß der Erfindung wird diese Aufgabe mit den Merkmalen des Patentanspruchs 1 gelöst.

Mit der Erfindung ist eine Rolle geschaffen, bei der die Kontrolle der Rolle auf Risse in einfacher Weise möglich ist. Durch das Vorsehen eines mit der Gasdruckkontrolleinrichtung zusammenwirkenden Ventils besteht die Möglichkeit, den im Innenraum des Rollenkörpers herrschenden Gas- bzw. Luftdruck zu messen. Dieser Innenraum ist vollständig geschlossen, da die den Innenraum umgebenden Bauteile miteinander verschweißt sind. Im Falle einer Undichtigkeit, beispielsweise durch einen durchgehenden Riss in einer Schweißnaht, im Rollenkörper oder im Rillengrund oder an einer anderen Stelle des Rollenkörpers oder an jeder anderen Stelle der Rolle, ändert sich der Druck im Innenraum, was von der Gasdruckkontrolleinrichtung detektiert wird. Auf diese Weise ist eine selbständige und zugleich zuverlässige Kontrolle der Rolle möglich. Der Innendruck als solcher ist für die Sicherheit des Bauteils "Rolle" irrelevant; über diese physikalische Größe "Gasdruck" wird aber indirekt auf die Integrität der Konstruktion geschlossen.

In Weiterbildung der Erfindung ist das Ventil in einem Steg angeordnet. Diese Ausgestaltung erweist sich als vorteilhaft, weil die zwischen Rollenkranz und Nabe angeordneten Stege üblicherweise eine glatte, nicht geschwungene Form haben und somit ohne großen konstruktiven Aufwand zur Anordnung des Ventils geeignet sind.

Vorteilhaft ist in dem Steg eine Bohrung vorgesehen, die das Ventil aufnimmt. Dies stellt eine übliche Bauart für die Anordnung von Ventilen dar, so dass auch auf handelsübliche Formen von Ventilen zurückgegriffen werden kann.

In anderer Weiterbildung der Erfindung ist die Gasdruckkontrolleinrichtung an dem Ventil vorgesehen. Diese Ausgestaltung ermöglicht die Verwendung von lediglich einem Bauteil, nämlich dem Ventil, welches einstückig mit der Gasdruckkontrolleinrichtung versehen ist. Dies macht die Montage besonders einfach.

In Ausgestaltung der Erfindung ist auf das Ventil eine Ventilkappe aufgeschraubt, in die die Gasdruckkontrolleinrichtung integriert ist. Die Ventilkappe schützt das freie Ende des Ventils gegen Verschmutzung und Beschädigungen.

Die Integration in die Ventilkappe stellt dabei eine sehr einfache Möglichkeit dar, die erfindungsgemäße Überwachungsmöglichkeit zu realisieren. Es ist hierzu lediglich notwendig, ein handelsübliches Ventil an dem Rollenkörper anzuordnen. Die erfindungsgemäße Überwachung kann dann mit der erfindungsgemäß ausgestalteten Ventilkappe erfolgen.

Bevorzugt ist die Ventilkappe mit einem Betätigungsglied versehen. Das Betätigungsglied führt beim Aufschrauben der Ventilkappe auf das Ventil zu dessen Öffnung. Dadurch ist gewährleistet, dass die Gasdruckkontrolleinrichtung mit dem im Innenraum der Rollenkammer herrschenden Gasdruck beaufschlagt wird.

In weiterer Ausgestaltung der Erfindung ist der Innenraum mit einem relativ zum Atmosphärendruck erhöhten Gasdruck gefüllt. Dies ermöglicht in besonders zuverlässiger Art und Weise eine Überwachung auf durchgehende Risse. Dies ist dadurch bewirkt, dass der Unterschied zwischen dem Atmosphärendruck und dem erhöhten Gasdruck im Innenraum frei wählbar ist, so dass die Differenz zwischen beiden Drücken relativ hoch eingestellt werden kann. Dadurch ist ein Austritt von Gas aus dem Innenraum, leichter ermittelbar, da es im Falle eines Risses zu einer deutlichen Gasdrucksenkung im Innenraum kommt.

Äußerst bevorzugt enthält das Modul einen Temperatursensor. Mit Hilfe des Temperatursensors lassen sich beispielsweise Temperaturänderungen an der Rolle ermitteln. Die Feststellung einer Temperaturerhöhung kann dabei beispielsweise auf eine erhöhte Reibung an der Rolle hindeuten, was einerseits mit einer erhöhten Reibung der Rollenlagerung und folglich mit einem Lagerschaden in Zusammenhang stehen kann, andererseits mit einer erhöhten Seilreibung einer Seilrolle, beispielsweise im Falle der Blockade einer Rolle. In jedem Fall stellt die Ermittlung und Überwachung der Temperatur eine weitere Möglichkeit der Verschleißüberwachung bereit.

In vorteilhafter Weiterbildung der Erfindung enthält das Modul mindestens einen Beschleunigungssensor. Mit dem Beschleunigungssensor lassen sich die Rotationsgeschwindigkeit der überwachten Rolle aber auch deren Vibrationen ermitteln. Auf diese Weise kann frühzeitig auf sich anbahnende oder abrupt auftretende Schäden an der Rolle reagiert werden, um ein vollständiges Versagen zu vermeiden.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

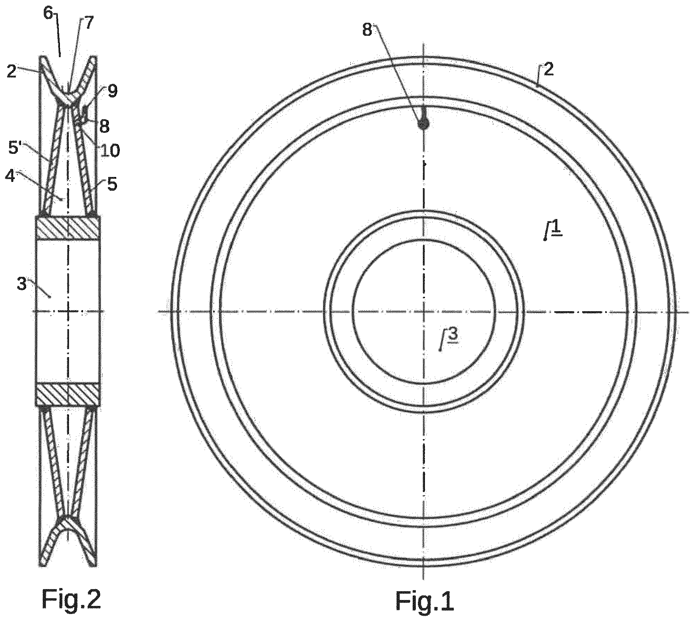

- Figur 1: die Ansicht einer Rolle;
- Figur 2: den Schnitt durch die in Figur 1 dargestellte Rolle.

Die als Ausführungsbeispiel gewählte Rolle ist in Form einer Seilrolle ausgebildet. Sie besteht aus einem Rollenkörper 1 mit einem Rollenkranz 2. Der Rollenkörper 1 weist in seinem Mittelpunkt eine Nabe 3 auf. Die Nabe 3 dient zur Aufnahme eines Lagers, mit welchem die Rolle dann auf die an dem jeweiligen Kran oder dergleichen angeordnete Welle aufgesetzt ist. Der Rollenkörper 1 und der Rollenkranz 2 sind im Ausführungsbeispiel aus Stahl hergestellt.

Der Rollenkörper 1 weist zwei Stege 5 und 5' auf, die den Bereich zwischen der Nabe 3 und dem Rollenkranz 2 bilden. Die Stege 5, 5' sind jeweils mit der Nabe 3 und dem Rollenkranz 2 verschweißt. Durch diese Ausgestaltung ist ein luftdichter Innenraum 4 geschaffen.

In dem Rollenkranz 2 ist eine Rille 6 zur Führung eines Seils ausgebildet. Die Rille 6 weist einen Rillengrund 7 auf. Die Rille 6 weist eine im Wesentlichen V-förmige Ausbildung auf, wobei der Rillengrund 7 in Form eines Radius ausgebildet ist. Der Radius des Rillengrundes 7 ist in Abhängigkeit von dem Durchmesser des verwendeten Seils gewählt. Ebenso sind die Tiefe der Rille 6 sowie die Breite des Rollenkranzes 2 in Abstimmung mit dem jeweiligen Seil gewählt. Der Rillengrund 7 kann zusätzlich gehärtet sein.

Der Rollenkörper 1 weist erfindungsgemäß ein Ventil 8 auf, auf das eine Ventilkappe 9 aufschraubbar ist. Das Ventil 8 ist im Ausführungsbeispiel im Steg 5 angeordnet. Hierzu ist in dem Steg 5 eine Bohrung 10 vorgesehen.

Das Ventil 8 weist in bekannter Weise einen Ventilschaft auf, der von einer Ventilbohrung durchsetzt ist. Am Innenumfang der Ventilbohrung ist ein Ventilsitz ausgebildet, an dem in bekannter Weise ein Ventilkörper anliegen kann, der von einer Feder gegen den Ventilsitz gedrückt wird und das Ventil verschließt. In dem Ventilkörper ist ein Ventilstößel vorgesehen. Durch Verstellung des Stößels kann ein Druckmedium durch die Ventilbohrung hindurchtreten. Der Ventilschaft ist an seinem freien, dem Steg 5 abgewandten Ende mit einem Außengewinde versehen, auf das die Ventilkappe 9 aufgeschraubt ist.

In montiertem Zustand ist die Bohrung 10 von einem Teil des Ventilschafts des Ventils 8 durchsetzt; der übrige Teil des Schafts ragt über den Steg 5 hervor. Im Ausführungsbeispiel ist die Bohrung 9 als Gewindebohrung ausgeführt, in die das Ventil 8 abgedichtet eingeschraubt ist. Durch Aufschrauben einer Überwurfmutter auf den Ventilschaft ist das Ventil 8 zuverlässig an dem Rollenkörper 1 befestigt. In Abwandlung des Ausführungsbeispiels besteht auch die Möglichkeit, das Ventil 8 in die dann als einfache Durchgangsbohrung ausgeführte Bohrung 9 einzustecken. In dieser Ausführung ist der Schaft des Ventils 8 beispielsweise mit einer Gummierung versehen, die eine Abdichtung des Ventils zur Bohrung hervorruft. Andere zum Abdichten geeignete Formen und Materialien sind möglich, bspw. das Einkleben des Ventils oder auch eine konische Gestaltung der Bohrung, in die das Ventil abgedichtet gepresst wird.

Das Ventil 8 wirkt mit einer Gasdruckkontrolleinrichtung zusammen. Im Ausführungsbeispiel ist das Ventil 8 zusätzlich zu den üblichen Komponenten eines Druckluftventils unmittelbar mit der Gasdruckkontrolleinrichtung versehen. Diese besteht im Ausführungsbeispiel aus einer Signalerzeugungseinrichtung und aktiven Komponenten. Sie ermöglichen eine Kontrolle des Gasdrucks in dem Innenraum 4. Die Signalerzeugungseinrichtung ist derart an dem Ventilfuß angebracht, dass eine Strömungsverbindung zwischen der Ventilbohrung und dem zwischen den Stegen 5, 5' gebildeten Innenraum besteht.

Im Ausführungsbeispiel ist die Signalerzeugungseinrichtung nach Art eines Moduls ausgebildet, das beispielsweise einen Drucksensor, Schaltungseinrichtungen zur Bildung des Drucksignals, einen Temperatursensor, eine Sende- und Empfangseinrichtung, eine Aktivierungseinrichtung, eine Speichereinheit und eine Energiequelle für elektrische Energie enthalten kann. Die Schaltungseinrichtung kann beispielsweise von einem Mikroprozessor gebildet sein. Bei der Energiequelle kann es sich um eine Mikrobatterie handeln. Die genannten Komponenten sind bevorzugt auf einer Platine angeordnet. Das gesamte Modul ist vorzugsweise in einem Gehäuse angeordnet. In diesem Fall weist das Gehäuse Bohrungen auf, über welche der Drucksensor dauerhaft mit dem Gasdruck in dem zwischen den Stegen 5, 5' gebildeten Innenraum 4 beaufschlagt ist. Die Aktivierungseinrichtung aktiviert den Drucksensor, die Schaltungseinrichtung und die Sendeeinrichtung, nachdem ein Aktivierungssignal empfangen worden ist. Alternativ können die genannten Bauelemente auch in einem dauerhaften Zustand bzw. in Intervallen betrieben werden.

In Abwandlung des Ausführungsbeispiels kann die Kontrolle des Gasdrucks auch über die auf das Ventil 8 aufgeschraubte Ventilkappe 9 erfolgen. In diesem Fall ist die Gasdruckkontrolleinrichtung in die Ventilkappe 9 integriert. Die Ventilkappe 9 weist in diesem Fall ein Gehäuse auf, in dem die Gasdruckkontrolleinrichtung untergebracht ist. Die Gasdruckkontrolleinrichtung besteht ebenso aus einer Signalerzeugungseinrichtung und aktiven Komponenten. Die Ventilkappe 9 ist mit einem Betätigungsglied versehen, welches beim Aufschrauben der Kappe auf den Ventilschaft das Ventil öffnet. Dadurch ist der Drucksensor der Signalerzeugungseinrichtung dauerhaft mit dem Gasdruck in dem zwischen den Stegen 5, 5' gebildeten Innenraum 4 beaufschlagt. Die Signalerzeugungseinrichtung weist gleichermaßen eine Schaltungseinrichtung zur Bildung des Drucksignals, einen Drucksensor, eine Aktivierungseinrichtung und eine Energiequelle für elektrische Energie auf.

Bei der erfindungsgemäßen Rolle findet eine zuverlässige und automatische Überwachung hinsichtlich des Auftretens von durchgehenden Rissen, beispielsweise der Schweißnähte, am Rollenkörper oder auch im Rillengrund statt. Dies ist dadurch bewirkt, dass das Ventil 8 in Verbindung mit dem Innenraum 4 im Rollenkörper 1 steht. Durch die am Ventil 8 bzw. an der Ventilkappe 9 vorgesehene Gasdruckkontrolleinrichtung kann eine Überwachung des Gasdrucks im Innenraum 4 erfolgen. Soweit dieser mit einem zum Atmosphärendruck erhöhten Druck versehen ist, ist dies besonders einfach möglich, da ein Riss zu einem erheblichen Druckverlust im Innenraum 4 führt. Dieser ist über die Kontrolleinrichtung leicht messbar. Neben der Füllung des Innenraums 4 mit Luft ist es vorteilhafter Weise auch möglich, den Innenraum mit einem von Luft verschiedenen Gas befüllt werden, bspw. Stickstoff. Dadurch kann die Diffusion durch das Ventil bzw. die Rolle reduziert werden. Die erfindungsgemäße Vorrichtung erfüllt jedoch auch ihren Zweck, wenn der Innenraum nicht bewusst mit einem Überdruck versehen wird. Da der Innenraum 4 geschlossen ist, stellt sich üblicherweise im Innenraum ein anderer Gasdruck ein als der jeweilige Atmosphärendruck am Einsatzort der Rolle, da der Herstellort der Rollen nicht der Ort der Benutzung der Rolle ist. Folglich herrscht üblicherweise am Einsatzort der Rolle ein anderer Atmosphärendruck als am Ort der Herstellung, wobei für einen zuverlässigen Betrieb der Überwachung Druckschwankungen durch Temperaturänderungen herausgerechnet werden müssen.

Im Falle einer ermittelten Gasdruckveränderung im Innenraum durch den in der Gasdruckkontrolleinrichtung vorgesehenen Drucksensor wird über die Sendeeinrichtung ein Signal an eine Empfangseinrichtung ausgesandt. Das Versenden des Signals kann in verschiedene Weise erfolgen, beispielsweise über Bluetooth oder Funkfrequenzen. An der jeweiligen Empfangseinrichtung kann daraufhin eine Warnung ausgelöst werden. Dies kann beispielsweise im Führerstand von Kränen, Baggern, Seilbahnen oder dergleichen erfolgen. Auch kann das Signal an eine übergeordnete Kontrollstelle gesandt werden. Das Warnsignal ermöglicht dem jeweiligen Personal den Betrieb rechtzeitig vor einem Bauteilversagen einzustellen, bspw. die Last kontrolliert abzusetzen, und die defekte Rolle auszutauschen. Mit dem jeweiligen Signal über den erfolgten Druckverlust wird gleichzeitig eine Kennung ausgesandt, so dass die Empfangseinheit unmittelbar erkennt, welche im Falle von mehreren an dem Gerät vorgesehenen Rollen den Druckverlust gemeldet hat. Gleichzeitig kann der Druckverlust in der Speichereinheit gespeichert werden. Dies ist insbesondere dann vorteilhaft, wenn keine dauerhafte Überwachung erfolgt, sondern lediglich eine im Bedarfsfall vorgesehene Überwachung vorgenommen wird. Selbstverständlich ist es auch möglich, die Aktivierungseinrichtung regelmäßig automatisch abzufragen, so dass in bestimmten Intervallen eine Meldung an die Empfangseinheit bzw. an die überwachende Station übersandt werden kann.

Mit der Erfindung ist eine zuverlässige Überwachung von Rollen oder Rädern auf durchgehende Risse möglich. Dies gilt insbesondere auch für solche Rollen, die an sehr schlecht zugänglichen Orten installiert sind, beispielsweise auf Ölbohrplattformen oder dergleichen. Zudem ist durch die Übersendung des Signals dem Personal unmittelbar kenntlich gemacht, welche Rolle einen Defekt meldet. Dies ist ebenfalls sehr hilfreich, da vielfach eine große Anzahl an Rollen in Geräten wie z.B. Ölbohranlagen, Kranen oder Ship-Liftanlagen verbaut ist.

Bei der erfindungsgemäßen Rolle können darüber hinaus weitere Sensoren vorgesehen sein, die eine Überwachung weiterer physikalischer Größen ermöglichen. So ist beispielsweise die Anbringung eines oder mehrerer Beschleunigungssensoren möglich, die in verschiedenen Ebenen die Beschleunigungen messen können. Mit diesen lassen sich u. a. die Rotationsgeschwindigkeit der jeweiligen Rolle messen. Gleichzeitig kann damit die Beschleunigung der Rolle ebenso ermittelt werden, wie unter bestimmten Voraussetzungen die Gesamtzahl der über die Laufzeit der Rolle erfolgten Umdrehungen. Daraus lässt sich beispielsweise die Restlebensdauer der Rolle ermitteln. Auch kann damit bei Anlagen, die mit einer Mehrzahl von Rollen ausgestattet ist, ein Vergleich zwischen den Werten verschiedener Rollen erfolgen, wodurch ermittelt werden kann, welche Rollen stärker beansprucht sind als andere. Damit besteht die Möglichkeit, stärker belastete Rollen früher auszutauschen als weniger stark belastete. Auch ein Austausch von hochdynamisch belasteten Rollen gegen weniger stark belastete in derselben Anlage ist möglich, um so eine optimale Ausnutzung der Lebensdauer aller Rollen zu ermöglichen, ohne das Risiko eines Versagens zu erhöhen.

Zudem lassen sich mit Beschleunigungssensoren auch Vibrationen messen. Auf diese Weise sind unter anderem Unwuchten an der überwachten Rolle feststellbar. Treten Vibrationen schleichend im Verlauf des Betriebs der Rolle auf, kann dies ein Hinweis auf einen beginnenden Lagerschaden sein. Bei einem schlagartigen Auftreten von Vibrationen kann es sich um einen plötzlichen Schaden handeln, welcher das Einstellen des Betriebs zur Folge haben sollte. Durch die unmittelbare Feststellung des Schadens ist die Möglichkeit geschaffen, den Betrieb rechtzeitig vor einem vollständigen Versagen einzustellen, bspw. die Last kontrolliert abzusetzen.

Soweit auch diese Sensoren mit einer Sendeeinrichtung versehen sind, können die ermittelten Messwerte entweder regelmäßig bzw. dauerhaft an eine Empfangseinrichtung aussenden oder es wird ein Signal bei Überschreiten eines vorher eingestellten Maximalwertes ausgesandt. Das Versenden kann auf alle oben beschriebenen Arten erfolgen.

Die gesamte Sensorik bietet zudem die Möglichkeit, bei Inbetriebnahme einer Anlage, sei es, dass diese nur eine Rolle umfasst, oder sei es, dass sie eine Mehrzahl an Rollen umfasst, einen Normalzustand zu ermitteln, der das Ursprungsniveau der Rollen in Bezug auf Temperatur, Vibrationen, Gasdruck usw. wiedergibt. Ausgehend von diesem Normalzustand können dann Schwellenwerte festgelegt werden, bei deren Erreichen in jedem Fall das Aussenden eines Signals erfolgen muss oder - im Falle einer dauerhaften Übertragung von Messwerten - ein Warnsignal ausgesandt werden muss. Zudem lässt sich ausgehend von diesem Normalzustand der Verschleiß der Rollen anhand sich verändernder Messwerte ablesen.

Die erfindungsgemäße Sensorik bietet des Weiteren die Möglichkeit, mehrere Rollen zu Gruppen zusammen zu fassen, die ein miteinander vergleichbares Betriebsverhalten aufweisen müssen. Sobald die Sensorik bei einer solchen Zusammenfassung an einer oder mehreren Rollen abweichende Messwerte ermittelt, kann dies ein Hinweis auf einen sich anbahnenden Schaden sein. Dadurch können Fehlinterpretationen von Messwerten vermieden werden, beispielsweise, wenn stark erhöhte Temperaturen an einzelnen Rollen gemessen werden. Wenn aber diejenigen Rollen einer Anlage zu einer Gruppe zusammengefasst sind, die der Sonneneinstrahlung stärker ausgesetzt sind als andere Rollen der Anlage, können Fehlinterpretationen, die sich aus den erhöhten Temperaturen ergeben, vermieden werden. Gleiches gilt, wenn beispielsweise eine Rolle einer Gruppe eine geringere Rotationsgeschwindigkeit hat als andere Rollen der Gruppe. Daraus lässt sich zum Beispiel ableiten, dass sich möglicherweise ein Lagerschaden anbahnt oder bereits vorliegt. Die Feststellung einer Rollenblockade durch Übertragung einer Rotationsgeschwindigkeit im Bereich um null ermöglicht eine unmittelbare Stilllegung der Anlage. Auf diese Weise ist ein Schaden in der Seilrille einer Seilrolle durch Schleifen des Seils verhindert, ebenso ein Verschleiß am Seil, was im Extremfall zum Reißen des Seils und Lastabsturz führen kann.

## Patentansprüche

1. Rolle, bestehend aus einem Rollenkörper (1) mit einem Rollenkranz (2), wobei der Rollenkörper (1) mindestens zwei Stege (5, 5') und in seinem Mittelpunkt eine Nabe (3) aufweist, wobei die Stege (5, 5') den Bereich zwischen der Nabe (3) und dem Rollenkranz (2) bilden und zwischen denen ein Innenraum (4) gebildet ist, **dadurch gekennzeichnet, dass** der Rollenkörper (1) ein Ventil (8) aufweist, wobei eine Gasdruckkontrolleinrichtung vorhanden ist, die mit dem Ventil (8) zusammenwirkt und die den Gasdruck im Innenraum (4) misst.

2. Rolle nach Anspruch 1, **dadurch gekennzeichnet, dass** das Ventil (8) in einem Steg (5, 5') angeordnet ist.

3. Rolle nach Anspruch 2, **dadurch gekennzeichnet, dass** in dem Steg (5, 5') eine Bohrung (10) vorgesehen ist, die das Ventil (8) aufnimmt.

4. Rolle nach einem der vorgenannten Ansprüche, **dadurch gekennzeichnet, dass** die Gasdruckkontrolleinrichtung an dem Ventil (8) vorgesehen ist.

5. Rolle nach einem der vorgenannten Ansprüche, **dadurch gekennzeichnet, dass** auf das Ventil (8) eine Ventilkappe (9) aufgeschraubt ist, in die die Gasdruckkontrolleinrichtung integriert ist.

6. Rolle nach Anspruch 5, **dadurch gekennzeichnet, dass** die Ventilkappe (9) mit einem Betätigungsglied versehen ist.

7. Rolle nach einem der vorgenannten Ansprüche, **dadurch gekennzeichnet, dass** die Gasdruckkontrolleinrichtung eine Signalerzeugungseinrichtung umfasst.

8. Rolle nach Anspruch 7, **dadurch gekennzeichnet, dass** die Signalerzeugungseinrichtung nach Art eines Moduls ausgebildet ist.

9. Rolle nach Anspruch 8, **dadurch gekennzeichnet, dass** das Modul einen Drucksensor, Schaltungseinrichtungen zur Bildung des Drucksignals, eine Aktivierungseinrichtung und eine Energiequelle für elektrische Energie enthält.

10. Rolle nach Anspruch 8 oder 9, **dadurch gekennzeichnet, dass** das Modul einen Temperatursensor enthält.

11. Rolle nach einem der Ansprüche 8 bis 10, **dadurch gekennzeichnet, dass** das Modul mindestens einen Beschleunigungssensor enthält.

12. Rolle nach einem der vorgenannten Ansprüche, **dadurch gekennzeichnet, dass** der Innenraum (4) mit einem relativ zum Atmosphärendruck erhöhten Gasdruck gefüllt ist.

## Claims

1. Roller consisting of a roller body (1) with a roller and cage assembly (2), wherein the roller body (1) has at least two webs (5, 5') and a hub (3) in its centre, wherein the webs (5, 5') form the area between the hub (3) and the roller and cage assembly (2) and between which an inner space (4) is formed, **characterised in that** the roller body (1) has a valve (8), wherein a gas pressure control device is provided, which cooperates with the valve (8) and which measures the gas pressure in the inner space (4).

2. Roller according to claim 1, **characterised in that** the valve (8) is arranged in a web (5, 5').

3. Roller according to claim 2, **characterised in that** a bore (10) is provided in the web (5, 5'), which receives the valve (8).

4. Roller according to one of the previous claims, **characterised in that** the gas pressure control device is provided on the valve (8).

5. Roller according to one of the previous claims, **characterised in that** a valve cap (9) is screwed onto the valve (8), in which the gas pressure control device is integrated.

6. Roller according to claim 5, **characterised in that** the valve cap (9) is provided with an actuating member.

7. Roller according to one of the previous claims, **characterised in that** the gas pressure control device comprises a signal generating device.

8. Roller according to claim 7, **characterised in that** the signal generating device is designed in the manner of a module.

9. Roller according to claim 8, **characterised in that** the module contains a pressure sensor, circuit means for forming the pressure signal, an activation means and an energy source for electric energy.

10. Roller according to claim 8 or 9, **characterised in that** the module contains a temperature sensor.

11. Roller according to one of claims 8 to 10, **characterised in that** the module contains at least one acceleration sensor.

12. Roller according to one of the previous claims, **characterised in that** the inner space (4) is filled with an increased gas pressure relative to the atmospheric pressure.

## Revendications

1. Rouleau composé d'un corps (1) de rouleau avec une couronne (2) de rouleau, sachant que le corps (1) de rouleau présente au moins deux nervures (5, 5') et qu'il présente un moyeu (3) en son centre, sachant que les nervures (5, 5') forment la zone comprise entre le moyeu (3) et la couronne (2) de rouleau et qu'entre elles est formé un volume intérieur (4), **caractérisé en ce que** le corps (1) de rouleau présente une valve (8), sachant qu'est présent un dispositif de contrôle de pression de gaz interagissant avec la valve (8) et mesurant la pression du gaz dans le volume intérieur (4).

2. Rouleau selon la revendication 1, **caractérisé en ce que** la valve (8) est disposée dans une nervure (5, 5').

3. Rouleau selon la revendication 2, **caractérisé en ce que** dans la nervure (5, 5') est prévu un alésage (10) recevant la valve (8).

4. Rouleau selon l'une des revendications précédentes, **caractérisé en ce que** le dispositif de contrôle de la pression du gaz est prévu contre la valve (8).

5. Rouleau selon l'une des revendications précédentes, **caractérisé en ce que** sur la valve (8) est vissée une coiffe (9) de valve dans laquelle est intégré le dispositif de contrôle de la pression du gaz.

6. Rouleau selon la revendication 5, **caractérisé en ce que** la coiffe (9) de valve est munie d'un organe d'actionnement.

7. Rouleau selon l'une des revendications précédentes, **caractérisé en ce que** le dispositif de contrôle de la pression du gaz comprend un dispositif générateur de signal.

8. Rouleau selon la revendication 7, **caractérisé en ce que** le dispositif générateur de signal est configuré en forme de module.

9. Rouleau selon la revendication 8, **caractérisé en ce que** le module contient un capteur de pression, des dispositifs de commutation pour former le signal de pression, un dispositif d'activation et une source d'énergie électrique.

10. Rouleau selon la revendication 8 ou 9, **caractérisé en ce que** le module contient un capteur de température.

11. Rouleau selon l'une des revendications 8 à 10, **caractérisé en ce que** le module contient au moins un capteur d'accélération.

12. Rouleau selon l'une des revendications précédentes, **caractérisé en ce que** le volume intérieur (4) est rempli d'un gaz se trouvant à une pression qui, relativement à la pression atmosphérique, est supérieure à celui-ci.
